# EUROPEAN PATENT SPECIFICATION

(11) **EP 3 923 536 B1**
(45) Date of publication and mention of the grant of the patent: **24.01.2024**
(21) Application number: 20382491.7
(22) Date of filing: 08.06.2020
(51) Int. Cl.: H04L 65/80, H04L 65/1083, H04L 65/65, H04W 4/50, H04W 24/02, H04W 28/02, H04W 28/26, H04W 36/16, H04W 36/30, H04W 72/04, H04L 47/38, H04W 40/12, H04W 40/36

(54) **COMPUTER IMPLEMENTED METHOD FOR ALLOCATING WIRELESS NETWORK AND ADAPTIVE VIDEO STREAMING RESOURCES**
COMPUTERIMPLEMENTIERTES VERFAHREN ZUR ZUWEISUNG VON DRAHTLOSEM NETZWERK UND ADAPTIVEN VIDEO-STREAMING-RESSOURCEN
PROCÉDÉ MIS EN UVRE PAR ORDINATEUR POUR L'ATTRIBUTION DE RESSOURCES RÉSEAU SANS FIL ET DE FLUX VIDÉO ADAPTATIF

(43) Date of publication of application: 15.12.2021
(73) Proprietor: Fundació Privada I2CAT, Internet i Innovació Digital a Catalunya, 08034 Barcelona (ES)
(72) Inventor: Catalán Cid, Miguel, 08034 Barcelona (ES); Camps Mur, Daniel, 08034 Barcelona (ES); Betzler Plans, August, 08034 Barcelona (ES)
(74) Representative: Isern Patentes y Marcas S.L.

(56) References cited:
- US-A1- 2014 219 088
- US-A1- 2014 269 323
- EMMANUEL THOMAS ET AL: "ENHANCING MPEG DASH PERFORMANCE VIA SERVER AND NETWORK ASSISTANCE", IBC 2015 CONFERENCE, 11-15 SEPTEMBER 2015, AMSTERDAM,, 11 September 2015 (2015-09-11), XP030082549,
- ZUBOW ANATOLIJ ET AL: "BIGAP - Seamless handover in high performance enterprise IEEE 802.11 networks", NOMS 2016 - 2016 IEEE/IFIP NETWORK OPERATIONS AND MANAGEMENT SYMPOSIUM, IEEE, 25 April 2016 (2016-04-25), pages 445-453, XP032918134, DOI: 10.1109/NOMS.2016.7502842 [retrieved on 2016-06-30]

## Description

### TECHNICAL FIELD OF THE INVENTION

The present invention relates to allocating network resources, and more particularly to a computer-implemented method for allocating wireless network and adaptive video streaming resources.

### BACKGROUND OF THE INVENTION

It is well known that in the field of telecommunications, the use of mobile devices is constantly growing. At the same time, the growing use of mobile devices is associated with a growth in the use of applications that are increasingly consuming more bandwidth. For all this, there are more and more scenarios in which there is a high density of user devices demanding a large bandwidth which leads to a saturation of the network. These data are studied in the report VNI Cisco. 2018. Cisco visual networking index: Forecast and trends, 2017-2022. (2018) in which current trends are analyzed and reflected as more than half of global bandwidth corresponds to video streaming services and this trend is expected to increase in coming years.

A clear example of this can be the scenario of an intercontinental flight, where the protocols for wireless networks are not sufficient to avoid network congestion and wired environments are necessary to allow connectivity for all user devices. The disadvantage of this solution is related to the maintenance of the physical infrastructure, which can easily deteriorate through continued use, leading to a high cost in maintenance or even repair of the network. For this reason, wireless solutions are sought for this problem.

Currently, the technology mainly used in these cases is Dynamic Adaptive Stream over HTTP (DASH). The problem with this solution is that the entire burden of resource optimization falls on the user device, who does not have a global vision of the network infrastructure that allows him to make better decisions. Therefore, the Server and Network Assisted DASH (SAND) extension was proposed to provide global network information to user devices through the exchange of messages with additional servers or proxies known as DASH Assisting Network Elements (DANE). However, in dense wireless scenarios additional solutions to optimize the allocation of wireless resources are also needed. This may also occur when using other adaptive non-DASH based video streaming solutions where video rate selections are taken by the user device.

For all this, it is necessary a method that joins a proper allocation of wireless network and adaptive video streaming resources in environments of high density of devices to contribute to a greater satisfaction in the Quality of Experience. "BIGAP - Seamless Handover in High Performance Enterprise IEEE 802.11 Networks", by A. Zubow et all, XP32918134, discloses an architecture for providing high network performance with seamless mobility by triggering handovers to better distribute the load in the network.

### SUMMARY OF THE INVENTION

The invention proposes a method for allocating wireless network resources and adaptive video streaming resources that overcome all the above-mentioned drawbacks and limitations.

The method is presented in independent claim 1. A computer for allocating network resources is presented in independent claim 14.

More specifically, adaptive video streaming resources may include DASH video streaming resources or video rates, among others.

The steps of the method are performed in a device for allocating network resources (as for example: a computer). In this regard, it is generated a list of recommended video rate and channel assignment for at least one user device.

More specifically, the main objective of this method is to allocate wireless network and adaptive video streaming resources in such a way as to guarantee a fair distribution of available resources in order to contribute to greater satisfaction of the Quality of Experience.

In a preferential implementation, the network consists of at least one user device and one access point that must be managed in order to allow resource distribution. Each user device, in turn, has at least one representation index that determines the quality or video rate of the video he or she wants to view.

Please note that this method tries to solve an NP-hard problem so the generated allocation can be a heuristic solution close to the optimal solution but with a much lower computational cost, which is a great advantage.

In a preferential implementation, in order to achieve a fair distribution of network resources, the method uses the criterion of max-min airtime fairness to provide proportional fairness between user devices. To this end, the method consists of a progressive algorithm that gradually increases the video rate or the representation index associated with each user device according to the airtime consumption of the user devices.

According to another aspect of the invention, the method can implement an additional stage which consists of implementing the resource allocation list. Preferably, the implementation of the resource allocation list is done by managing the necessary handovers for the proper assignment of each user device to a channel according to the resource allocation list, and by recommending a video rate for the proper assignment of each user device to a representation index according to the resource allocation list.

In order to manage the handovers, the method requires network triggered handovers, which is a feature not available in standard Wi-Fi enterprise systems. For this purpose, the method adopts a network model based on the BIGAP architecture, where all access points share the same Basic Service Set Identifier and their radio interfaces are assigned to a number of orthogonal channels according to the number of access points. Thus, association control relies on Dynamic Frequency Selection signaling to provide seamless channel switching (i.e. handovers). However, the method could also be implemented in other Software Defined Wireless Network architectures as, for instance, solutions based on creating one single virtual access point per station.

According to another aspect of the invention, the distribution of the resource allocation list involves communicating to each user device the recommended video rate generated by this method, which is a procedure not available in standard adaptive video streaming services. Preferably, in DASH-based services, the communication will be done through the DANE server connected to each user device. Accordingly, the DANE server sends a message to each user device with the video rate recommended to this user device. However, the method could also be implemented in a different way.

According to another preferred embodiment, each access point has at least one wireless interface assigned to one channel. In addition, the data obtained by the radio access network or video service telemetry method is comprised of the effective wireless bandwidth of a user device on a channel, and the available airtime on a channel. Preferably, the effective bandwidth is calculated as the nominal PHY data rate achievable given the channel conditions of a user device multiplied by the efficiency of the channel. To calculate the channel efficiency, the different channel access and protocol overheads are taken into account. To collect all the effective wireless bandwidth, preferably, each access point is equipped with an additional monitoring interface that captures the Received Signal Strength Indicator of the stations operating in other active channels of their radio access network, although other methods could be implemented. In addition, each access point keeps track of the available airtime in a channel which includes interference and congestion. A network administrator can modify the available airtime in a channel of each access point to take into account the existence of background traffic or reserved wireless resources.

Similarly, the method may also involve obtaining data from the video stream demanded by at least one client. Preferably, the data refers to the number of available representation indexes and video rates of the video stream, which can be obtained by two different procedures. The first procedure comprises obtaining the data by inspecting the MPD files. By the other hand, the second procedure comprises implementing SAND messages to the user devices, and preferably to the DASH client from the user device. All this data is acquired periodically by the method.

According to another aspect of the invention, generating the resource allocation list between each user device and at least one channel with an associated representation index requires checking if the next representation index associated to the user device means that the airtime capacity of the channel is still not exceeded, being understood by next representation index associated to the user device that which corresponds to the next higher representation index associated to the user device. One of the ways to perform this check when the actual channel assigned to the user device corresponds to the channel being checked is adding the airtime consumption of the representation index associated to the user device and, in turn, subtracting the airtime consumption of the next representation index associated to the user device to the available capacity of the channel and checking if the available capacity of the channel resulting from the operation is still greater than or equal to 0. In case the channel assigned to the user device is different from the channel being checked, one of the ways to perform this check is by adding the airtime consumption of the next representation index associated to the user device and checking if the available capacity of the channel resulting from the operation is still greater than or equal to 0.

In a preferential realization, if the next representation index associated to the user device does not exceed the capacity of the channel, the available capacity of any channel that has been involved in the check is updated and/or the representation index associated to the user device is updated. Also, the airtime consumed by the user device in all the available channels is updated. In addition, if the channel assigned to the user device is different from the channel being checked, the channel being checked is assigned as the user device associated channel.

In a preferential realization, the check is only carried out in those cases where there is a next representation index associated to the user device.

In a preferential realization, the user device is obtained from a list. Preferably, this list is made up of tuples, with one tuple for each possible combination between user devices and available channels in the network. Preferably, the tuple comprises at least two elements, one of which is the airtime consumed by the user device in the associated channel using a representation index and another element is the user device video rate using the representation index. In this sense, in a preferential realization, at least these two values are initialized using the lowest representation index associated to the user device.

In a preferred embodiment, the items on the list are sorted in ascending order using the airtime consumed by a user device associated with a channel using a representation index as a primary sorting key and the video rate associated with a representation index as a secondary sorting key.

In a preferential execution, check whether the next representation index associated with the user device means that the capacity of the channel is still not exceeded is done in a loop. The loop exit condition may be that the representation index associated to a user device of each user device is the maximum representation index available to the user device or that any increase in the representation index of any user device entails exceeding the available capacity of any channel.

The object of the present invention is also a data processing device comprising means for carrying out the steps of any embodiment of the method of the invention.

### DESCRIPTION OF THE DRAWINGS

The previous advantages and characteristics, in addition to others, shall be understood more fully in light of the following detailed description of exemplary embodiments, with reference to the drawing attached, which must be taken by way of illustration and not limitation, wherein:

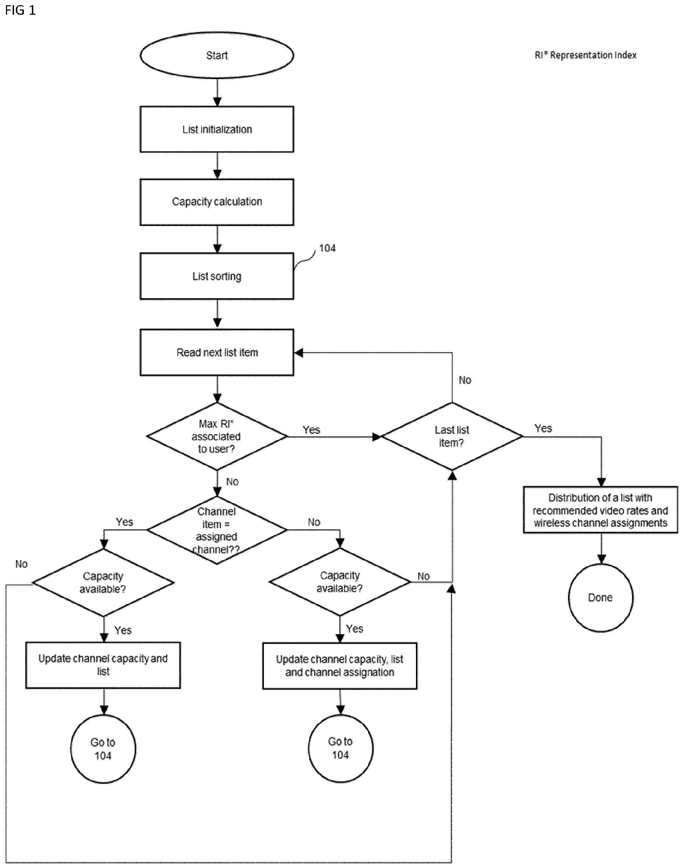

Figure 1: It shows an example of state diagram for some of the steps of the method.

### DETAILED DESCRIPTION OF THE INVENTION

In a preferential realization, this method is applied in a network that is formed by multiple access points, each of the access points having several channels, and several user devices receiving adaptive video streams, each of which has multiple available representation indexes or video rates.

In addition, the resource allocation list comprehends a channel assignment and a video rate recommendation per each user of the network.

To obtain the network information, the method obtains from each access point the effective wireless bandwidth and the available airtime of each of its channels. The effective wireless bandwidth is the nominal PHY data rate achievable given the channel conditions of a client, multiplied by its efficiency, while channel efficiency considers the different channel access and protocol overheads. In a preferred embodiment, each access point has a monitoring interface that collects the received signal strength indicator of the access points operating in other channels.

In addition, the method obtains the multiple representation indexes and the representation rate associated to each one of the representation indexes. In a preferred embodiment, this is achieved by inspecting the MPD files of the clients or by using SAND extensions.

Once the information is obtained, a list of tuples is constructed whose first element is the airtime consumed by a user device in a channel using a representation index and the second element is the video rate associated with the representation index for the user device. On the other hand, the channel currently assigned to each user device is saved in a resource allocation list.

The items in the list are then initialized using each user device lowest representation index. Then, for each channel, its available airtime is calculated by consulting the resource allocation list to obtain the set of user devices that are associated with the channel and, by consulting the list of tuples, to obtain the airtime consumed by the user device in the channel and subtract them from the airtime of the channel.

The next step (block 104) comprises sorting the items on the list in ascending order using the airtime consumed by a user device associated with a channel using a representation index as a primary sorting key and the video rate associated with a representation index as a secondary sorting key.

Once the items on the list are initialized, the following steps are performed for each item on the list:
- Check if the representation index associated to the user device of the first tuple is the maximum representation index associated to the user device. If they are identical, it goes on to the next element on the list. If they are different, it goes on to the next step.
- Check if the channel assigned to the user device in the resource allocation list is the same as the channel of the list element. If so, calculate the available capacity of the channel plus the airtime consumed by the user device using its actual representation index minus the airtime consumed by the user device using the following increased representation index associated to the user device, and check whether it is greater than or equal to zero. In the case of the second affirmative check, the available capacity of the channel is updated with the calculated value, all tuples associated to the user device are updated with the airtime consumed by the user device in the different channels using the following increased representation index associated to the user device and the user device video rate associated to the following increased representation index associated to the user device. Then, go to block 104. In the case of the first negative check, the second check is not performed and the next step is taken. In the case of the second negative check, it is passed to the next element in the list.
- Check if the channel assigned to the user device in the resource allocation list is different from the channel of the list element. If so, calculate the available capacity of the channel minus the airtime consumed by the user device using the following increased representation index associated to the user device and check whether it is greater than or equal to zero. In the case of the two affirmative checks, the available capacity of the channel is updated with the calculated value; the capacity of the channel associated to the user device in the resource allocation list is updated by adding to the capacity of the channel associated to the user device in the resource allocation list the airtime consumed by the user device using the representation index; all tuples associated to the user device are updated with the airtime consumed by the user device in the different channels using the following increased representation index associated to the user device and the user device video rate associated to the following increased representation index associated to the user device. The channel assigned to the user device in the resource allocation list is then updated with the channel of the list element. Then, go to block 104. In the case of the first negative check, the second check is not performed and it goes to the next element in the list. In case of being the second negative check, it goes to the next element of the list.

Once the entire list has been run, all user devices will have the maximum representation index associated with the user device or increasing the representation index associated with the user device implies exceeding the available capacity of any of the channels. This way, the list contains in the second element of the tuple the video rate associated to the representation index for the user device and the resource allocation list contains the channel to be assigned to each user device.

With this information, a recommended video rate is sent to each client and the necessary handovers are made to implement the resource allocation list.

## Claims

1. Computer implemented method for allocating wireless network resources and adaptive video streaming resources, wherein the method is implemented by a computer for allocating network resources, wherein the network comprises:
at least one user device, the user device receiving an adaptive video stream, and
at least one wireless access point, the wireless access point operating at least in one channel,
the method comprising the following steps:
- obtaining data from the at least one wireless access point and video stream information, the data comprising the effective bandwidth of a user device on a channel and the available airtime on a channel;
- generating a resource allocation list, wherein each user device and at least one channel are associated with a representation index, the representation index being an index configured to determine the quality or rate of the adaptive video stream;
- distributing to the at least one user device the resource allocation list;
- implementing the resource allocation list distribution by sending a list of at least one channel associated with a user device to a server, wherein the server sends a message to each implicated wireless access point to trigger the needed handovers, and by performing at least one video rate recommendation for the assignment of the at least one user device to a representation index according to the resource allocation list,
wherein the distribution of the resource allocation list to the at least one user device comprises communicating to each at least one user device the recommended video rate;
wherein the recommended video rate is the video rate associated to the maximum representation index associated with the at least one user device.

2. A method according to any previous claim wherein the data obtained from the at least one wireless access point and video stream information comprises the effective wireless bandwidth experienced by at least one user device in at least one channel and the available airtime in at least one channel.

3. A method according to any previous claim wherein each wireless access point is equipped with at least one monitoring interface that captures the received signal strength indicator of the wireless access points operating in other channels.

4. A method according to any previous claim wherein the step of obtaining data at least from wireless access point and video stream information comprises achieving at least the number of available representation indexes or the video rates of the video stream at least of one user device.

5. A method according to claim 4 wherein achieving at least the number of available representation indexes or the video rates of the video stream at least of one user device involves inspecting the MPD files or implementing SAND messages to the DASH from at least one user device.

6. A method according to claim 4 wherein generating the resource allocation list between each user device and at least one channel with an associated representation index involves checking whether increasing the representation index associated with at least one user device means that the available airtime in a channel is greater than or equal to 0.

7. A method according to claim 6 wherein the available airtime using an increased representation index is greater than or equal to 0 and involves setting the available airtime in the channel to the available airtime using the increased representation index and setting the increased representation index as the representation index associated to the user device.

8. A method according to any of the claims 6 or 7 wherein the channel is different from the channel associated with the user device, the available airtime in the channel associated with the user device is updated and the channel is set as the channel associated with the user device.

9. A method according to any of the claims 6 to 8 wherein checking whether increasing the representation index associated with at least one user device means that the available airtime in a channel is greater than or equal to 0 is only performed if the representation index associated with the user device can be increased.

10. A method according to any of the claims 6 to 9 wherein the user device is obtained from a list and each item on the list is a tuple with one element of the tuple being the airtime consumed by a user device associated with a channel using a representation index and another element of the tuple being the video rate of the user device using the representation index and the user device is obtained from at least one element of the tuple and the items on the list comprise all the possible combinations between user devices and channels.

11. A method according to claim 10 wherein the parameter of the representation index from any item on the list is initialized with the lowest representation index from the associated user device and the items on the list are sorted in ascending order using the airtime consumed by a user device associated with a channel using a representation index as a primary sorting key and the video rate associated with a representation index as a secondary sorting key.

12. A method according to any of the claims 6 to 11 wherein checking whether increasing the representation index associated with at least one user device means that the available airtime in a channel is greater than or equal to 0 it is repeated as long as for at least one of the user devices the representation index is not the maximum representation index or there is any increase in the representation rate associated with at least one user device that allows that the available airtime in a channel is greater than or equal to 0.

13. A method according to any previous claim wherein the step of distributing the resource allocation list involves sending a list of at least one video rate associated with a user device to a server and the server sends a message to each user device on the list with the video rate associated.

14. A computer for allocating network resources comprising means for carrying out the steps of the method according to any of claims 1 to 13.

## Patentansprüche

1. Computerimplementiertes Verfahren zum Zuweisen von drahtlosen Netzwerkressourcen und adaptiven Video-Streaming-Ressourcen, wobei das Verfahren von einem Computer zum Zuweisen von Netzwerkressourcen implementiert wird, wobei das Netzwerk Folgendes umfasst:
mindestens eine Benutzervorrichtung, wobei die Benutzervorrichtung einen adaptiven Videostream empfängt, und
mindestens einen drahtlosen Zugangspunkt, wobei der drahtlose Zugangspunkt mindestens in einem Kanal arbeitet,
wobei das Verfahren die folgenden Schritte umfasst:
- Erhalten von Daten von dem mindestens einen drahtlosen Zugangspunkt und Videostream-Informationen, wobei die Daten die effektive Bandbreite einer Benutzervorrichtung auf einem Kanal und die verfügbare Sendezeit auf einem Kanal umfassen;
- Erzeugen einer Ressourcenzuweisungsliste, wobei jeder Benutzervorrichtung und mindestens einem Kanal ein Repräsentationsindex zugeordnet ist, wobei der Repräsentationsindex ein Index ist, der konfiguriert ist, um die Qualität oder Rate des adaptiven Videostreams zu bestimmen;
- Verteilen der Ressourcenzuweisungsliste an die mindestens eine Benutzervorrichtung;
- Implementieren der Verteilung der Ressourcenzuweisungsliste durch Senden einer Liste von mindestens einem Kanal, der einer Benutzervorrichtung zugeordnet ist, an einen Server, wobei der Server eine Nachricht an jeden beteiligten drahtlosen Zugangspunkt sendet, um die erforderlichen Übergaben auszulösen, und durch Durchführen mindestens einer Videoratenempfehlung für die Zuteilung der mindestens einen Benutzervorrichtung zu einem Repräsentationsindex gemäß der Ressourcenzuweisungsliste,
wobei die Verteilung der Ressourcenzuweisungsliste an die mindestens eine Benutzervorrichtung das Kommunizieren der empfohlenen Videorate an jede der mindestens eine Benutzervorrichtung umfasst;
wobei die empfohlene Videorate die Videorate ist, die dem maximalen Repräsentationsindex zugeordnet ist, welcher der mindestens einen Benutzervorrichtung zugeordnet ist.

2. Verfahren nach einem der vorherigen Ansprüche, wobei die von dem mindestens einen drahtlosen Zugangspunkt erhaltenen Daten und Videostream-Informationen die effektive drahtlose Bandbreite umfassen, die mindestens eine Benutzervorrichtung in mindestens einem Kanal erfährt, und die verfügbare Sendezeit in mindestens einem Kanal.

3. Verfahren nach einem der vorherigen Ansprüche, wobei jeder drahtlose Zugangspunkt mit mindestens einer Überwachungsschnittstelle ausgestattet ist, die den Indikator für die empfangene Signalstärke der drahtlosen Zugangspunkte erfasst, die in anderen Kanälen arbeiten.

4. Verfahren nach einem der vorherigen Ansprüche, wobei der Schritt des Erhaltens von Daten mindestens von dem drahtlosen Zugangspunkt und Videostream-Informationen das Erzielen mindestens der Anzahl verfügbarer Repräsentationsindizes oder der Videoraten des Videostreams mindestens einer Benutzervorrichtung umfasst.

5. Verfahren nach Anspruch 4, wobei das Erzielen mindestens der Anzahl verfügbarer Repräsentationsindizes oder der Videoraten des Videostreams mindestens einer Benutzervorrichtung das Überprüfen der MPD-Dateien oder das Implementieren von SAND-Nachrichten an das DASH von mindestens einer Benutzervorrichtung umfasst.

6. Verfahren nach Anspruch 4, wobei das Erzeugen der Ressourcenzuweisungsliste zwischen jeder Benutzervorrichtung und mindestens einem Kanal mit einem zugeordneten Repräsentationsindex die Prüfung beinhaltet, ob eine Erhöhung des Repräsentationsindex, der mindestens einer Benutzervorrichtung zugeordnet ist, bedeutet, dass die verfügbare Sendezeit in einem Kanal größer oder gleich 0 ist.

7. Verfahren nach Anspruch 6, wobei die verfügbare Sendezeit unter Verwendung eines erhöhten Repräsentationsindex größer oder gleich 0 ist und das Festlegen der verfügbaren Sendezeit im Kanal auf die verfügbare Sendezeit unter Verwendung des erhöhten Repräsentationsindex und das Festlegen des erhöhten Repräsentationsindex als Repräsentationsindex umfasst, welcher der Benutzervorrichtung zugeordnet ist.

8. Verfahren nach einem der Ansprüche 6 oder 7, wobei sich der Kanal von dem der Benutzervorrichtung zugeordneten Kanal unterscheidet, die verfügbare Sendezeit in dem der Benutzervorrichtung zugeordneten Kanal aktualisiert wird und der Kanal als der Kanal festgelegt wird, der der Benutzervorrichtung zugeordnet ist.

9. Verfahren nach einem der Ansprüche 6 bis 8, wobei die Prüfung, ob eine Erhöhung des Repräsentationsindex, der mindestens einer Benutzervorrichtung zugeordnet ist, bedeutet, dass die verfügbare Sendezeit in einem Kanal größer oder gleich 0 ist, nur durchgeführt wird, wenn der Repräsentationsindex, der der Benutzervorrichtung zugeordnet ist, erhöht werden kann.

10. Verfahren nach einem der Ansprüche 6 bis 9, wobei die Benutzervorrichtung aus einer Liste erhalten wird und jedes Element in der Liste ein Tupel ist, wobei ein Element des Tupels die Sendezeit ist, die von einer Benutzervorrichtung verbraucht wird, die einem Kanal unter Verwendung einem Repräsentationsindex zugeordnet ist und ein weiteres Element des Tupels die Videorate der Benutzervorrichtung unter Verwendung des Repräsentationsindex ist und die Benutzervorrichtung aus mindestens einem Element des Tupels erhalten wird und die Elemente in der Liste alle möglichen Kombinationen zwischen Benutzervorrichtungen und Kanälen umfassen.

11. Verfahren nach Anspruch 10, wobei der Parameter des Repräsentationsindex eines beliebigen Elements in der Liste mit dem niedrigsten Repräsentationsindex der zugeordneten Benutzervorrichtung initialisiert wird und die Elemente in der Liste in aufsteigender Reihenfolge sortiert werden, unter Verwendung der Sendezeit, die von einer Benutzervorrichtung verbraucht wird, die einem Kanal zugeordnet ist, wobei ein Repräsentationsindex als primärer Sortierschlüssel und die einem Repräsentationsindex zugeordnete Videorate als sekundärer Sortierschlüssel verwendet werden.

12. Verfahren nach einem der Ansprüche 6 bis 11, wobei die Prüfung, ob die Erhöhung des Repräsentationsindex, der mindestens einer Benutzervorrichtung zugeordnet ist, bedeutet, dass die verfügbare Sendezeit in einem Kanal größer oder gleich 0 ist, solange wiederholt wird, wie für mindestens eine der Benutzervorrichtungen der Repräsentationsindex nicht der maximale Repräsentationsindex ist oder eine Erhöhung der Repräsentationsrate vorliegt, die mindestens einer Benutzervorrichtung zugeordnet ist, die ermöglicht, dass die verfügbare Sendezeit in einem Kanal größer oder gleich 0 ist.

13. Verfahren nach einem der vorherigen Ansprüche, wobei der Schritt des Verteilens der Ressourcenzuweisungsliste das Senden einer Liste mit mindestens einer Videorate, die einer Benutzervorrichtung zugeordnet ist, an einen Server beinhaltet und der Server eine Nachricht mit der zugeordneten Videorate an jede Benutzervorrichtung auf der Liste sendet.

14. Computer zum Zuweisen von Netzwerkressourcen, der Mittel zum Durchführen der Schritte des Verfahrens nach einem der Ansprüche 1 bis 13 umfasst.

## Revendications

1. Procédé mis en oeuvre par ordinateur pour allouer des ressources de réseau sans fil et des ressources de diffusion en flux continu vidéo adaptatif, dans lequel le procédé est mis en oeuvre par un ordinateur pour allouer des ressources de réseau, dans lequel le réseau comprend :
au moins un dispositif utilisateur, le dispositif utilisateur reçoit un flux vidéo adaptatif, et
au moins un point d'accès sans fil, le point d'accès sans fil fonctionnant au moins dans un canal,
le procédé comprenant les étapes suivantes :
- obtention de données provenant de l'au moins un point d'accès sans fil et des informations de flux vidéo, les données comprenant la bande passante effective d'un dispositif utilisateur sur un canal et le temps d'antenne disponible sur un canal ;
- génération d'une liste d'allocation de ressources, dans lequel chaque dispositif utilisateur et au moins un canal sont associés à un index de représentation, l'indice de représentation étant un indice configuré pour déterminer la qualité ou le débit du flux vidéo adaptatif ;
- distribution à l'au moins un dispositif utilisateur de la liste d'allocation de ressources ;
- mise en oeuvre de la distribution de liste d'allocation de ressources en envoyant une liste d'au moins un canal associé à un dispositif utilisateur à un serveur, dans lequel le serveur envoie un message à chaque point d'accès sans fil impliqué pour déclencher les transferts intercellulaires nécessaires, et en effectuant au moins une recommandation de débit vidéo pour l'attribution de l'au moins un dispositif utilisateur à un indice de représentation selon la liste d'allocation de ressources,
dans lequel la distribution de la liste d'allocation de ressources à l'au moins un dispositif utilisateur comprend la communication à chaque au moins un dispositif utilisateur du débit vidéo recommandé ;
dans lequel le débit vidéo recommandé est le débit vidéo associé à l'indice de représentation maximal associé à l'au moins un dispositif utilisateur.

2. Procédé selon l'une quelconque revendication précédente, dans lequel les données obtenues à partir de l'au moins un point d'accès sans fil et des informations de flux vidéo comprennent la bande passante sans fil effective expérimentée par au moins un dispositif utilisateur dans au moins un canal et le temps d'antenne disponible dans au moins un canal.

3. Procédé selon l'une quelconque revendication précédente, dans lequel chaque point d'accès sans fil est équipé d'au moins une interface de surveillance qui capture l'indicateur d'intensité du signal reçu des points d'accès sans fil fonctionnant sur d'autres canaux.

4. Procédé selon l'une quelconque revendication précédente, dans lequel l'étape d'obtention de données au moins à partir du point d'accès sans fil et d'informations de flux vidéo comprend la réalisation au moins du nombre d'indices de représentation disponibles ou des débits vidéo du flux vidéo d'au moins un dispositif utilisateur.

5. Procédé selon la revendication 4, dans lequel la réalisation d'au moins le nombre d'indices de représentation disponibles ou des débits vidéo du flux vidéo d'au moins un dispositif utilisateur implique l'inspection des fichiers MPD ou la mise en oeuvre de messages SAND vers le DASH à partir d'au moins un dispositif utilisateur.

6. Procédé selon la revendication 4, dans lequel la génération de la liste d'allocation de ressources entre chaque dispositif utilisateur et au moins un canal avec un indice de représentation associé implique la vérification de si l'augmentation de l'indice de représentation associé à au moins un dispositif utilisateur signifie que le temps d'antenne disponible dans un canal est supérieur ou égal à 0.

7. Procédé selon la revendication 6, dans lequel le temps d'antenne disponible utilisant un indice de représentation augmenté est supérieur ou égal à 0 et implique le réglage du temps d'antenne disponible dans le canal sur le temps d'antenne disponible en utilisant l'indice de représentation augmenté et le réglage de l'indice de représentation augmenté comme indice de représentation associé au dispositif utilisateur.

8. Procédé selon l'une quelconque des revendications 6 ou 7, dans lequel le canal est différent du canal associé au dispositif utilisateur, le temps d'antenne disponible dans le canal associé au dispositif utilisateur est mis à jour et le canal est réglé comme canal associé au dispositif utilisateur.

9. Procédé selon l'une quelconque des revendications 6 à 8, dans lequel la vérification de si l'augmentation de l'indice de représentation associé à au moins un dispositif utilisateur signifie que le temps d'antenne disponible dans un canal est supérieur ou égal à 0 n'est effectuée que si l'indice de représentation associé au dispositif utilisateur peut être augmenté.

10. Procédé selon l'une quelconque des revendications 6 à 9, dans lequel le dispositif utilisateur est obtenu à partir d'une liste et chaque article de la liste est un tuple, un élément du tuple étant le temps d'antenne consommé par un dispositif utilisateur associé à un canal utilisant un indice de représentation et un autre élément du tuple étant le débit vidéo du dispositif utilisateur utilisant l'indice de représentation et le dispositif utilisateur est obtenu à partir d'au moins un élément du tuple et les articles de la liste comprennent toutes les combinaisons possibles entre les dispositifs utilisateur et les canaux.

11. Procédé selon la revendication 10, dans lequel le paramètre de l'indice de représentation de n'importe quel article de la liste est initialisé avec l'indice de représentation le plus bas du dispositif utilisateur associé et les articles de la liste sont triés par ordre croissant en utilisant le temps d'antenne consommé par un dispositif utilisateur associé à un canal utilisant un indice de représentation comme clé de tri primaire et le débit vidéo associé à un indice de représentation comme clé de tri secondaire.

12. Procédé selon l'une quelconque des revendications 6 à 11, dans lequel la vérification de si l'augmentation de l'indice de représentation associé à au moins un dispositif utilisateur signifie que le temps d'antenne disponible dans un canal est supérieur ou égal à 0 est répétée tant que pour au moins un des dispositifs utilisateurs, l'indice de représentation n'est pas l'indice de représentation maximal ou il y a une augmentation du taux de représentation associé à au moins un dispositif utilisateur qui permet que le temps d'antenne disponible dans un canal soit supérieur ou égal à 0.

13. Procédé selon l'une quelconque revendication précédente, dans lequel l'étape de distribution de la liste d'allocation de ressources implique l'envoi d'une liste d'au moins un débit vidéo associé à un dispositif utilisateur à un serveur et le serveur envoie un message à chaque dispositif utilisateur de la liste avec le débit vidéo associé.

14. Ordinateur destiné à allouer des ressources de réseau comprenant des moyens pour exécuter les étapes du procédé selon l'une quelconque des revendications 1 à 13.
